Europäisches Patentamt

European Patent Office

Office européen des brevets

(11) Veröffentlichungsnummer: **0 293 600 B1**

(12) **EUROPÄISCHE PATENTSCHRIFT**

(45) Veröffentlichungstag der Patentschrift: **08.04.92**

�["] Int. Cl.⁵: **C04B 35/02**, C04B 35/10

(21) Anmeldenummer: **88106810.0**

(22) Anmeldetag: **28.04.88**

(54) **Verfahren zur Herstellung eines feuerfesten Oxid -Kohlenstoff-Steins.**

(30) Priorität: **07.05.87 DE 3715178**

(43) Veröffentlichungstag der Anmeldung:
**07.12.88 Patentblatt  88/49**

(45) Bekanntmachung des Hinweises auf die
Patenterteilung:
**08.04.92 Patentblatt  92/15**

(84) Benannte Vertragsstaaten:
**AT FR GB IT NL**

(56) Entgegenhaltungen:
**EP-A- 0 096 508**
**DE-A- 2 248 125**
**DE-A- 3 307 149**

(73) Patentinhaber: **VEREINIGTE ALUMINIUM-**
**WERKE AKTIENGESELLSCHAFT**
**Berlin - Bonn Postfach 2468 Georg-**
**von-Boeselager-Strasse 25**
**W-5300 Bonn 1(DE)**

(72) Erfinder: **Wilkening, Siegfried, Dr.**
**Waldstrasse 17**
**W-5303 Alfter-Oedekoven(DE)**

Rank Xerox (UK) Business Services

**Beschreibung**

Gegenstand der Erfindung ist ein Verfahren zur Herstellung eines feuerfesten, eisen- und schlackenresistenten Steines aus refraktären Oxiden und/oder den entsprechenden Hydroxiden und Kohlenstoff für die Auskleidung metallurgischer Gefäße.

Feuerfeste Produkte aus Oxid-Kohlenstoff-Mischungen sind in verschiedenen Formen bekannt. In den sogenannten Teer-Dolomit- und Teer-Magnesia-Steinen wird ein Versatz aus gebranntem Dolomit, gebranntem Magnesit oder Sintermagnesia mit Teer oder Pech gebunden. Der Bindeteer oder das Bindepech wird durch Tempern und höheres Erhitzen in Bindekoks umgewandelt. Auch kalt und warm härtbare Kunstharze mit relativ hoher Koksausbeute werden als Bindemittel anstelle von Teer und Pech für diesen Zweck verwendet. Zur Erhöhung der Schlackenbeständigkeit werden solchen Steinen zusätzlich feine Grafit- und Kokspulver zugemischt, in der Praxis bis ca. 20 Gew.-%. In den kohlenstoffgebundenen Oxidsteinen können auch andere Oxide als die oben erwähnten als Grundmaterial dienen, wie z.B. Sinteraluminiumoxid, -zirkoniumoxid oder -mullit.

Eine andere Gruppe sind keramisch gebundene Feuerfeststeine, die einen Zusatz an Kohlenstoff oder Naturgrafit erhalten. Die Ton-Grafit-Massen, die vorwiegend für die Herstellung von Schmelztiegeln verwendet werden, sind ein bekanntes Beispiel für diese Gruppe.

In bezug auf Kohlenstoffsteine hat es sich für einige Anwendungsgebiete, z.B. in Berührung mit Roheisen, als vorteilhaft erwiesen, diesen feinteilige Oxide, insbesondere Aluminiumoxid, in Mengen von bis zu ca. 10 Gew.-% zuzusetzen.

Dieser kurze Überblick zeigt, daß an sich Mischungen aus Feuerfestoxiden mit Kohlenstoffmaterialien in verschiedenen Verhältnissen bekannt sind. Die Resistenz eines Oxid-Kohlenstoff-Kombinationssteines hängt nun nicht allein von seinem Mischungsverhältnis Oxid/Kohlenstoff und der individuellen Beständigkeit seiner Komponenten ab, sondern auch von der Art seiner Vermischung und Fabrikation. In der Fertigung großformatiger Feuerfestblöcke muß ferner berücksichtigt werden, daß dafür erfahrungsgemäß gröbere Kornfraktionen erforderlich sind.

Das der Erfindung zugrunde liegende Ziel besteht darin, Oxide und Kohlenstoff in der Weise zu vermischen, und zu verbinden, daß einerseits eine optimale Widerstandsfähigkeit gegen gasförmige und flüssige Medien in den metallurgischen Aggregaten gewährleistet wird und sich andererseits großformatige Feuerfestblöcke herstellen lassen.

Erfindungsgemäß wird dieses dadurch erreicht, daß zunächst das feinteilige, pulverförmige Feuerfestoxid in geschmolzenem Teerpech dispergiert wird. Die Konsistenz der Oxid-Pech-Masse kann zähflüssig bis teigig sein, d.h. sie kann einerseits so fließfähig sein, daß sie Behälterräume im Fließzustand ausfüllt, oder andererseits so plastisch sein, daß sie mit Hilfe eines Extruders zu Ballen geformt werden kann. Ein Mischungsverhältnis zwischen Oxid und Pech läßt sich nicht allgemein angeben. Es hängt ab von der Feinheit und Saugfähigkeit des Oxids und von dem Erweichungspunkt bzw. der Viskosität des verwendeten Bindepechs. Erfahrungsgemäß liegt der Bindemittelanteil zwischen 20 und 40 Gewichtsprozent. Die Mischung muß nicht allein aus Oxid und Pech bestehen. Den Oxid-Pech-Massen können Kohlenstoff- oder Metallpulver zur Beeinflussung bestimmter Eigenschaften zugesetzt werden. Mit Zusätzen von Grafitpulvern, z.B. in Mengen von 5 - 20 Gew.-%, wird die Wärmeleitfähigkeit angehoben. Zur Erhöhung des Kohlenstoffanteils in der Mischung wird beispielsweise Petrolkokspulver oder Ruß zugegeben. Ein Zusatz von metallischem Siliciumpulver bis zu 20 Gew.-% ist vorteilhaft, wenn die Festigkeit und Oxidationsbeständigkeit des daraus später hergestellten Produktes verbessert werden soll.

Die Oxid-Pech-Massen oder solche mit den genannten Zusätzen werden einem Verkokungsprozeß in reduzierender Atmosphäre unterworfen. Dazu dienen Ringbrenn- oder Tunnelöfen, wie sie allgemein für die Carbonisierung von Kohlenstoffelektroden verwendet werden. Fließfähige Massen werden in mit Papier oder Pappe ausgeschlagenen, hitzebeständigen, eventuell zerlegbaren Stahlkästen carbonisiert. Teigige, zu Ballen abgeformte Massen können direkt oder mit Papier umhüllt in eine Kokspulver-Packmasse eingebettet werden. Die Aufheizgeschwindigkeit der Oxid-Pech-Massen beträgt zwischen 200 und 600°C weniger als 20°C/h, bevorzugt sogar weniger als 5°C/h. Die niedrige Aufheizrate garantiert eine hohe Koksausbeute des Pechs und eine niedrige Porosität und hohe Festigkeit der verkokten Masse. Es ist überhaupt ein erstrangiges Ziel des erfindungsgemäßen Verfahrens, durch Beschaffenheit des Oxids, der Zusätze und des Pechbinders sowie durch die thermische Behandlung im Brennofen ein Maximum an Festigkeit und Dichte des gebrannten Zwischenprodukts zu erreichen. In den meisten Fällen genügt eine Endtemperatur des Carbonisierungs- und Glühprozesses von 950 - 1000°C; jedoch ist in einigen Fallen aus Gründen der thermischen Stabilität des carbokeramischen Produktes oder auch z.B. wegen der Umwandlung von zugesetztem Siliciumpulver in $\beta$-Siliciumcarbid eine Erhitzung der Masse über 1000°C bis zu Temperaturen von 1700°C.

Nach dem Carbonisierungs- und Glühprozeß oder dem sogenannten Brennen wird die feste Oxid-Kohlenstoff-Masse gebrochen und zu Kornfraktionen aufbereitet. Aus den Kornfraktionen wird ein Füller dichter Packung aufgebaut, der als Pulver- oder Staubfraktion das bereits zuvor verwendete Oxid oder Oxid mit Zusätzen enthält. Der Füller, bestehend aus den Oxid-Kohlenstoff-Kornfraktionen sowie dem freien, ungebundenen Oxid als feinste Kornfraktion wird mit Pech als Bindemittel zu einer formbaren, sogenannten grünen Masse gemischt. Diese wird auf beheizten Vibrations- oder Hydraulikpressen zu Blöcken, Platten oder anderen Formkörpern verdichtend geformt. Die grünen Formkörper werden wie künstliche Kohlenstofferzeugnisse oder in der Weise wie oben beschrieben carbonisiert oder gebrannt. Die Kohlenstoffgehalte in den Oxid-Kohlenstoff-Steinen können zwar beliebig zwischen 10 und 50 Gew.-% eingestellt werden, bevorzugt werden jedoch Kohlenstoffgehalte zwischen 15 und 25 Gew.-%.

Durch das erfindungsgemäße Verfahren werden carbokeramische Steine von extrem hoher Homogenität geschaffen, die sich in be stimmten Anwendungsbereichen durch überlegene Beständigkeit auszeichnen.

Das erfindungsgemäße Verfahren eignet sich ferner vor allem für synthetische Refraktäroxide, die in feinteiliger Form erzeugt werden, wie beispielsweise Aluminiumoxid ($Al_2O_3$), Titanoxid ($TiO_2$) oder Magnesiumoxid (MgO). Für den Einsatz vorstehender Oxide für hochwertige Feuerfesterzeugnisse werden sie gewöhnlich agglomeriert, einer Hochtemperatursinterung unterzogen und dann wieder zu Kornklassen aufbereitet. Die Überführung der pulvrigen Oxide in Sintergranulat ist energieintensiv und sehr kostenaufwendig. Nach dem erfindungsgemäßen Verfahren ist dieser, das oxidische Grundmaterial enorm verteuernde Aufwand für die Stückigmachung und Sinterung nicht erforderlich.

Im folgenden wird ein Durchführungsbeispiel für die Verwendung von feinteiligem Aluminiumoxid beschrieben.

Nachgemahlenes Hütten-Aluminiumoxid mit einer Korngröße kleiner 100 $\mu$m wird mit einem Teerpech, dessen Erweichungspunkt nach Kraemer & Sarnow 75°C beträgt, im Gewichtsverhältnis 3 : 1 bei 170°C gemischt. Die noch fließfähige Masse wird in Weißblechbehälter gefüllt und, eingebettet in Koksgrus, bis 1000°C gebrannt, wobei die Aufheizgeschwindigkeit zwischen 4 und 6°C/h liegt. Der gebrannte Aluminiumoxid-Kohlenstoff-Sinterkuchen hat eine Rohdichte von rd. 2,0 $g/cm^3$, eine wahre Dichte von 3,28 $g/cm^3$, eine Druckfestigkeit von rd. 40 $N/mm^2$ und einen Kohlenstoffgehalt von 19 Gew.-%. Der Sinterkuchen wird gebrochen und zu Kornfraktionen <1, 1 - 4, 4 - 8 und 8 - 16 mm aufbereitet. Die Rohdichte der Kornfraktionen liegt zwischen 2,7 und 3,2 $g/cm^3$. Mit diesen $Al_2O_3$-C-Kornfraktionen wird unter Zusatz des bereits erwähnten feinteiligen Aluminiumoxids die Rezeptur eines neuen Füllermaterials erstellt, in der etwa folgende Anteile enthalten sind:

```
Feinteiliges Al₂O₃                    = 20 Gew.-%
Al₂O₃-C-Material       < 1 mm         = 20 Gew.-%
     "          "      1 - 4 mm       = 20 Gew.-%
     "          "      4 - 8 mm       = 30 Gew.-%
     "          "      8 -16 mm       = 10 Gew.-%
```

Der vorstehende Füller wird mit einem Pech von 75 °C Erweichungspunkt bei 170 - 180 °C vermischt. Der Pechzusatz beträgt 15 Gew.-%. Die grüne pechgebundene Masse wird bei 160 °C auf einem Vibrationsverdichter zu Blöcken geformt und erreicht eine Abformdichte von 2,55 $g/cm^3$. Die grünen Formkörper werden ähnlich wie Kohlenstoffsteine bis 1100 °C mit einer Aufheizrate von ca. 5 °C/h gebrannt.

Die gebrannten Steine haben nachstehende durchschnittliche Eigenschaften:

$Al_2O_3$-Gehalt          79 Gew.-%
Kohlenstoffgehalt         21 Gew.-%
Wahre Dichte              3,2 $g/cm^3$
Rohdichte                 2,5 $g/cm^3$
Porosität                 22 %
Gasdurchlässigkeit        0,2 nPm
Druckfestigkeit           29 $N/mm^2$
Wärmeleitfähigkeit        4,6 W/mK

Roheisen- und Stahlbeständigkeit: Kein sichtbarer Angriff durch Stahlschmelze bei 1550°C im Tauchtest.

Schlackenbeständigkeit: Kein sichtbarer Angriff durch Hochofenschlacke bei 1550°C im Bechertest.

In dem vorstehenden Ausführungsbeispiel wurde das Ausgangsmaterial für den carbokeramischen Stein, nämlich das $Al_2O_3$-C-Sintergranulat, aus feinteiligem calciniertem Aluminiumoxid hergestellt. Man kann aber auch zur Erzeugung des $Al_2O_3$-C-Sintermaterials von getrocknetem Aluminiumhydroxid, $Al(OH)_3$, ausgehen. In diesem Falle erspart man sich die Calcinierung des Hydroxids zum Oxid und vereinigt die Entwässerung des Hydroxids mit der Carbonisierung des Pech- oder Teerbinders. Diese Kombination ist möglich, weil die Entbindung des Hydroxidwassers größtenteils unterhalb der Temperatur geschieht, bei der Wasserdampf mit dem Bindekohlenstoff zu Wassergas ($CO + H_2$) reagiert. Die Wassergasreaktion setzt bei ca. 600°C ein. Bei dieser Temperatur sind nur noch unbedeutende Reste von an das Oxid gebundenen OH-Gruppen vorhanden, die einen sehr geringen Kohlenstoffverlust hervorrufen.

In bezug auf das erwähnte Aluminiumhydroxid sei ein Beispiel angegeben: 78 Gew.-% getrocknetes Aluminiumhydroxid (Korngröße <125 $\mu$m) werden mit 2 Gew.-% Petrolkokspulver und 20 Gew.-% Pech (Erweichungspunkt 90°C) bei 180°C gemischt. Die Masse wird in der bereits dargelegten Weise gebrannt. Man erhält ein ebenfalls ausreichend dichtes Sintermaterial mit rd. 81 Gew.-% $Al_2O_3$ und rd. 19 Gew.-% Kohlenstoff.

Eine ähnliche Verarbeitung wie die von $Al(OH)_3$ ist mit gefälltem und getrocknetem Magnesiumhydroxid, $Mg(OH)_2$, möglich. Ebenfalls können auch hochwertige, getrocknete Tone nach dem beschriebenen Verfahren in kohlenstoffgebundene Schamotte übergeführt werden.

Denkbar sind auch andere Stückigmachungsverfahren, wie z.B. die Heißbrikettierung oder Heißpelletierung. Da die carbonisierten Oxid- bzw. Hydroxid-Pech-Gemische aufgrund des Kohlenstoffgehaltes elektrisch leitfähig sind (spezif. elektrische Widerstände des Sintergutes zwischen 500 und 2000 $\mu\Omega$m), kann zur Erzielung hoher Glühtemperaturen von über 1200°C in reduzierender Atmosphäre die elektrische Widerstandscalcinierung angewendet werden. Die Calciniertemperaturen dürfen allerdings nicht die carbothermischen Reduktionstemperaturen der Oxide überschreiten.

**Patentansprüche**

1.  Verfahren zur Herstellung eines feuerfesten, eisen- und schlackenresistenten Steines aus refraktären Oxiden und/oder den entsprechenden Hydroxiden und Kohlenstoff, dadurch gekennzeichnet, daß das Verfahren aus folgenden Schritten besteht:
    A. Mischen des feinteiligen refraktären Oxides und/oder des entsprechenden Hydroxides mit Pech zu einer homogenen grünen Masse,
    B. Verkoken und Glühen der grünen Masse zu einem festen, thermisch stabilen Sinterprodukt aus Oxid und Kohlenstoff,
    C. Zerkleinern und Klassieren des Sinterproduktes,
    D. Binden des zu Kornfraktionen aufbereiteten Sinterproduktes mit einer Mischung aus Oxid und/oder entsprechendem Hydroxid und Pech,
    E. Verdichten der so erhaltenen Masse zu einem Formling,
    F. Brennen des grünen Formlings in reduzierender Atmosphäre zu einem feuerfesten Stein.

2.  Verfahren nach Anspruch 1, dadurch gekennzeichnet, daß der Mischung aus Oxid und/oder Hydroxid und Pech im Verfahrensschritt A Koks-, Grafit- und/oder Siliziumpulver in einer Gesamtmenge bis zu 50 Gew.-% zugesetzt wird.

3.  Verfahren nach Anspruch 2, dadurch gekennzeichnet, daß das Koks-, Grafit- und/oder Siliziumzusätze enthaltende Sinterprodukt in Schritt D mit pechhaltigen Mischungen gebunden wird, deren Zusammensetzung nach dem Brennprozeß F derjenigen des Sinterproduktes nach Schritt B entspricht.

4.  Verfahren nach einem der vorhergehenden Ansprüche, dadurch gekennzeichnet, daß in der Mischung aus Oxid und/oder entsprechendem Hydroxid und Pech nach Verfahrensschritt A der Bindemittelanteil 15 bis 40 Gew.-% beträgt.

5.  Verfahren nach einem der vorhergehenden Ansprüche, dadurch gekennzeichnet, daß die thermische Behandlung der grünen Masse in Schritt B bis zu Temperaturen von 1700 °C erfolgt, wobei die Aufheizgeschwindigkeit im Bereich von 200 bis 600 °C 2 bis 20 °C/h beträgt.

6.  Verfahren nach einem der vorhergehenden Ansprüche, dadurch gekennzeichnet, daß die thermische Behandlung der grünen Masse in Verfahrensschritt B durch elektrische Widerstandserhitzung erfolgt.

**7.** Verfahren nach einem der vorhergehenden Ansprüche, dadurch gekennzeichnet, daß als refraktäre Oxide feinteilige reine Oxide, wie z.B. Aluminium-, Magnesium-, Silizium-, Titan- und/oder Zirkoniumoxid oder feinteilige oxidische Feuerfestrohstoffe, wie z.B. calcinierter Bauxit, Mullit, Zirkonsand oder ähnliche Oxidmischungen verwendet werden.

**8.** Verfahren nach einem der vorhergehenden Ansprüche, dadurch gekennzeichnet, daß als hydroxidische Vorstoffe getrocknetes Aluminium- oder Magnesiumhydroxid oder hochwertige, getrocknete Tone eingesetzt werden.

**9.** Verfahren nach einem der vorhergehenden Ansprüche, dadurch gekennzeichnet, daß die maximale Korngröße der eingesetzten Oxide bzw. Hydroxide 150 $\mu$m nicht überschreitet.

**10.** Verfahren nach einem der vorhergehenden Ansprüche, dadurch gekennzeichnet, daß die Kornfraktionen des aufbereiteten Sinterproduktes Korngrößen von 0 bis 16 mm aufweisen.

## Claims

**1.** A process for the production of a refractory, iron- and slag-resistant brick from refractory oxides and/or the corresponding hydroxides and carbon, characterized in that the process consists of the following steps:
A. mixing the fine-grained refractory oxide and/or the corresponding hydroxide with pitch to a homogeneous green material,
B. coking and calcining the green material to a solid, thermally stable sintered product consisting of oxide and carbon,
C. milling and sizing the sintered product,
D. bonding the sintered product, prepared as size fractions, with a mixture of oxide and/or the corresponding hydroxide and pitch,
E. compacting the material so obtained to a green brick,
F. firing the green brick in a reducing atmosphere to a refractory brick.

**2.** A process according to Claim 1, characterized in that to the mixture of oxide and/or hydroxide and pitch in process step A coke, graphite and/or silicon powders are added in a total amount of up to 50 wt.%

**3.** A process according to Claim 2, characterized in that the sintered product containing coke, graphite and/or silicon additives is bonded in Step D with pitch-containing mixtures, whose composition after the firing process F corresponds with that of the sintered product after Step B.

**4.** A process according to one of the preceding claims, characterized in that in the mixture of oxide and/or corresponding hydroxide and pitch after process step A, the proportion of bonding agent is 15 to 40 wt.%.

**5.** A process according to one of the preceding claims, characterized in that the thermal treatment of the green material in Step B takes place at temperatures of up to 1700 °C, the heating rate in the range from 200 to 600 deg. C being 2 to 20 °C/h.

**6.** A process according to one of the preceding claims, characterized in that the thermal treatment of the green material in Process Step B is carried out by electrical resistance heating.

**7.** A process according to one of the preceding claims, characterized in that fine-grained pure oxides, such as e.g. aluminium, magnesium, silicon, titanium and/or zirconium oxides or fine-grained oxidic refractory raw materials, such as e.g. calcined bauxite, mullite, zircon sand or similar oxide mixtures are used as refractory oxides.

**8.** A process according to one of the preceding claims, characterized in that dried aluminium hydroxide or magnesium hydroxide or high-grade dried clays are charged as hydroxidic precursors.

**9.** A process according to one of the preceding claims, characterized in that the maximum grain size of the oxides or hydroxides charged does not exceed 150 $\mu$m.

**10.** A process according to one of the preceding claims, characterized in that the size fractions of the prepared sintered product have grain sizes of 0 to 16 mm.

## Revendications

**1.** Procédé pour la fabrication de masses minérales réfractaires, résistantes au fer et aux scories, à partir d'oxydes réfractaires et/ou des hydroxydes correspondants et du carbone, caractérisé en ce qu'il consiste en les stades opératoires suivants :

A. mélange de l'oxyde réfractaire et/ou de l'hydroxyde correspondant en fines particules avec du brai, donnant une masse crue homogène,

B. cokéfaction et calcination de la masse crue en un produit fritté solide, stable à la chaleur, consistant en oxyde et carbone,

C. concassage et classification du produit fritté,

D. liaison du produit fritté, à l'état de fractions de grains, par un mélange d'oxyde et/ou de l'hydroxyde correspondant et de brai,

E. compression de la masse obtenue en un corps moulé,

F. cuisson du corps moulé cru en atmosphère réductrice, donnant la masse minérale réfractaire.

**2.** Procédé selon la revendication 1, caractérisé en ce que, au stade opératoire A., on ajoute au mélange d'oxyde et/ou d'hydroxyde et de brai de la poudre de coke, de graphite et/ou de silicium en quantité totale allant jusqu'à 50 % en poids.

**3.** Procédé selon la revendication 2, caractérisé en ce que le produit fritté contenant les adjonctions de coke, de graphite et/ou de silicium, est lié au stade opératoire D. par des mélanges contenant du brai dont la composition, après l'opération de combustion F., correspond à celle du produit fritté après le stade opératoire B.

**4.** Procédé selon l'une des revendications qui précèdent, caractérisé en ce que, dans le mélange de l'oxyde et/ou de l'hydroxyde correspondant et de brai, après le stade opératoire A., la proportion de liant est de 15 à 40 % en poids.

**5.** Procédé selon l'une des revendications qui précèdent, caractérisé en ce que le traitement à la chaleur de la masse crue, au stade opératoire B., est poursuivi jusqu'à des températures de 1700°C avec des vitesses de réchauffement de 2 à 20°C/h dans l'intervalle de 200 à 600°C.

**6.** Procédé selon une des revendications qui précèdent, caractérisé en ce que le traitement à la chaleur de la masse crue au stade opératoire B. est réalisé par chauffage par résistance électrique.

**7.** Procédé selon une des revendications qui précèdent, caractérisé en ce que l'on utilise en tant qu'oxydes réfractaires des oxydes purs en fines particules, par exemple de l'oxyde d'aluminium, de l'oxyde de magnésium, de l'oxyde de silicium, de l'oxyde de titane et/ou de l'oxyde de zirconium ou des matières premières réfractaires en fines particules apparentées à des oxydes, par exemple de la bauxite calcinée, de la mullite, du sable de zirconium ou des mélanges d'oxydes analogues.

**8.** Procédé selon une des revendications qui précèdent, caractérisé en ce que l'on' utilise en tant qu'hydroxydes de départ de l'hydroxyde d'aluminium ou de l'hydroxyde de magnésium séché ou des argiles de haute valeur séchées.

**9.** Procédé selon une des revendications qui précèdent, caractérisé en ce que la dimension maximale de grain des oxydes et hydroxydes mis en oeuvre ne dépasse pas 150 $\mu$m.

**10.** Procédé selon une des revendications qui précèdent, caractérisé en ce que les fractions de grains du produit fritté, après classification, contiennent des grains de 0 à 16 mm.